# EUROPEAN PATENT APPLICATION

(11) **EP 4 822 357 A1**
(43) Date of publication of application: **14.10.2026**
(21) Application number: 24900252.8
(22) Date of filing: 13.09.2024
(51) Int. Cl.: G01N 35/10, B06B 1/06, B08B 3/12

(54) **ULTRASONIC WASHING MACHINE, METHOD FOR INJECTING LIQUID INTO LIQUID STORAGE PART OF ULTRASONIC WASHING MACHINE, AND AUTOMATIC ANALYSIS DEVICE**

(30) Priority: 04.12.2023 JP 2023204535
(71) Applicant: Hitachi High-Tech Corporation, Minato-ku Tokyo 105-6409 (JP)
(72) Inventor: HORIE Yosuke, Tokyo 100-8280 (JP); KOBAYASHI Ryo, Tokyo 100-8280 (JP); TAKAYAMA Hiroyuki, Tokyo 105-6409 (JP); NONAKA Kohei, Tokyo 105-6409 (JP)
(74) Representative: MERH-IP Matias Erny Reichl Hoffmann Patentanwälte PartG mbB
(86) International application number: PCT/JP2024/032882
(87) International publication number: WO 2025/120955

(57) **Abstract**

Provided is a technique capable of reducing an amount of a cleaning liquid required for cleaning and improving cleaning maintainability. The present disclosure proposes an ultrasonic cleaner for ultrasonically cleaning a dispensing nozzle, the ultrasonic cleaner including: an ultrasonic transducer including a front mass; and a block member having a hole portion provided in a longitudinal direction for allowing the front mass to be inserted therein, and a cleaning tank installation recessed portion for installing a cleaning tank, which is a cleaning tank allowing a dispensing nozzle to be cleaned to be inserted therein, and which has a wall at least partially formed of an elastic body, in which the cleaning tank installation recessed portion is provided in the block member in a direction different from the longitudinal direction in which the hole portion is provided, a liquid storage part configured to store a liquid different from a cleaning liquid is formed by a gap formed between the front mass inserted into the hole portion, the hole portion, and the wall of the cleaning tank, the cleaning liquid held in the cleaning tank and the liquid stored in the liquid storage part are separated by the wall of the cleaning tank, and a tip portion of the front mass is disposed to emit an ultrasonic wave from a side of the cleaning tank.

## Description

### Technical Field

The present disclosure relates to an ultrasonic cleaner, a method for injecting a liquid into a liquid storage part of an ultrasonic cleaner, and automatic analyzer.

### Background Art

An automatic analyzer performs component analysis by mixing samples such as serum and urine with a reagent and measuring a transmittance of light emitted to a mixed solution. In the automatic analyzer, to dispense the samples by repeatedly using the same nozzle, nozzle cleaning processing of cleaning a nozzle tip with a water flow is performed before aspirating another sample.

However, in an automatic analyzer with a high throughput performance, since dispensing process is performed at a high speed, not enough time can be used for nozzle cleaning. Therefore, dirt derived from sample components may accumulate at the nozzle tip. When the dirt accumulates at the nozzle tip, variations in a dispensing amount, and carry-over in which the previous sample component is carried over to the next sample are likely to occur, and a measurement accuracy decreases. Therefore, the dirt is dealt with by performing removal with daily cleaning maintenance.

For example, PTL 1 discloses an ultrasonic cleaner having a configuration in which a bolted Langevin transducer (hereinafter, referred to as a "BLT") is attached to a lateral surface portion of a cleaning tank to deal with dirt on a nozzle tip, and ultrasonic waves are directly emitted from a front mass of the BLT in the cleaning tank to a nozzle via a liquid in the cleaning tank.

For example, PTL 2 discloses, as an example of an ultrasonic cleaner used for nozzle cleaning, a configuration in which a tank for storing a liquid is doubled, an ultrasonic transducer for vibrating is attached to an outer tank, and different types of liquids are put into the inner and outer tanks, respectively, to perform cleaning.

### Citation List

### Patent Literature

PTL 1: JP2023-034566A
PTL 2: JP2015-158426A

### Summary of Invention

### Technical Problem

For example, when adding a new unit that can perform nozzle cleaning maintenance in an automatic analyzer that has already been delivered and actually used, it is desirable to add a small cleaning unit in a narrow space remaining between disposed components or to temporarily add the cleaning unit at the time of maintenance. This is because a large-scale hardware change may cause an increase in modification cost and a period in which analysis cannot be performed.

In contrast, according to PTL 1, in a cleaning rack, a front mass portion of the BLT that emits the ultrasonic waves is in the liquid in the cleaning tank, and since the ultrasonic waves are directly emitted, cavitation (a phenomenon in which bubbles are generated and collapsed due to a pressure differences in the liquid) can be efficiently and powerfully generated on the nozzle for cleaning. To generate strong ultrasonic waves at the BLT, it is necessary to amplify an amplitude of an ultrasonic irradiation surface (front mass). Therefore, in PTL 1, a seal (O-ring) for preventing liquid leakage from the cleaning tank is provided on a flange portion serving as a node of vibration, and most of the front mass portion located on a tip side relative to the flange portion of the BLT is disposed in the liquid. The BLT is generally driven at a resonance frequency to vibrate with a large amplitude. In particular, a total length is designed to be long to resonate at a frequency of about 20 kHz to 50 kHz, which is advantageous for the generation of cavitation. Therefore, when a shape of the front mass is elongated and is disposed in the liquid as described above, a contact area with the liquid is large, and a cleaning liquid amount to be used is also large. The liquid in the cleaning tank is replaced with a new cleaning liquid before the nozzle cleaning and discarded after the cleaning.

When the cleaning liquid is discarded, cleaning work, such as water cleaning, is required for a region in contact with the contaminated liquid. In the above-described configuration in which the entire long front mass portion is immersed in the cleaning liquid, cleaning takes time and effort. Since a gap is formed between the elongated front mass and the cleaning tank, even when the same amount of liquid is put into the cleaning tank, the liquid level may be different depending on whether the liquid enters the gap, which affects the cleaning range.

In the example of cleaning using ultrasonic waves disclosed in PTL 2, a configuration similar to that of a general ultrasonic cleaner is used. When a piezoelectric element is provided in a general ultrasonic cleaner, a wide area portion, such as a bottom surface of the cleaning tank, is used as a diaphragm to amplify the amplitude of an ultrasonic irradiation surface, and a standing wave is generated in the liquid by the vibration. The standing wave has a region (an antinode of the standing wave) in which the sound pressure is high, and cavitation is generated in the same region.

However, according to the cleaning principle disclosed in PTL 2 described above, when a rack required to have a smaller (a smaller area) bottom surface (or side surface) than a commercially available ultrasonic cleaner is used, sufficient amplitude is not generated, and it is less likely to obtain a cleaning effect due to generation of cavitation. In particular, to intensively clean the tip of the nozzle having a small diameter of 1 mm or less, the cleaning efficiency becomes low.

In an indirect tank system (double cleaning tank) in which another tank is placed inside the cleaning tank in a general ultrasonic cleaner, a hard material (metal such as stainless steel or glass) is often selected for an indirect tank (inner tank). The reason is a principle that the vibration generated in the outer tank are propagated through a vibration surface in contact with the liquid or the indirect tank to generate the ultrasonic waves in the indirect tank, and the rigidity for propagating the vibration in the ultrasonic band having a high frequency is required.

However, metal or glass has a property of easily reflecting ultrasonic waves, and the ultrasonic waves from the outer tank are reflected by the indirect tank. The ultrasonic waves generated in the indirect tank are ultrasonic waves generated by exciting the indirect tank itself in the ultrasonic band, and the generation efficiency of cavitation (cleaning efficiency by cavitation) is lower than that in the method for directly emitting the ultrasonic waves. Therefore, in the indirect tank system, which is the cleaning principle as described above, since a distance between the BLT and the indirect tank needs to be set to be short in the rack-type cleaner configured in a narrow space, the ultrasonic waves reflected from the indirect tank are a load of BLT driving, and the driving efficiency is lowered.

In view of such circumstances, the present disclosure provides a technique capable of reducing an amount of a cleaning liquid required during cleaning and improving cleaning maintainability.

### Solution to Problem

To solve the above technical problems, the present disclosure proposes an ultrasonic cleaner for ultrasonically cleaning a dispensing nozzle, the ultrasonic cleaner including: an ultrasonic transducer including a front mass; and a block member having a hole portion provided in a longitudinal direction for allowing the front masses to be inserted therein, and a cleaning tank installation recessed portion for installing a cleaning tank, which is a cleaning tank allowing a dispensing nozzle to be cleaned to be inserted therein, and which has a wall at least partially formed of an elastic body, in which the cleaning tank installation recessed portion is provided in the block member in a direction different from the longitudinal direction in which the hole portion is provided, a liquid storage part configured to store a liquid different from a cleaning liquid is formed by a gap formed between the front mass inserted into the hole portion, the hole portion, and the wall of the cleaning tank, the cleaning liquid held in the cleaning tank and the liquid stored in the liquid storage part are separated by the wall of the cleaning tank, and a tip portion of the front mass is disposed to emit an ultrasonic wave from a side of the cleaning tank.

Additional features related to the present disclosure will be clarified based on the description of the present description and the accompanying drawings. Aspects of the present disclosure may be achieved and implemented using elements, combinations of various elements, the following detailed description, and accompanying claims.

The description of the present description is merely a typical illustration and does not limit the scope of the claims or application examples of the present disclosure in any sense.

### Advantageous Effects of Invention

According to the present disclosure, it is possible to provide an ultrasonic cleaner that has a configuration suitable for mounting in a narrow space such as a transport rack, can reduce an amount of cleaning liquid required during cleaning, can facilitate cleaning maintenance, and can emit strong ultrasonic waves onto an outer peripheral portion of a nozzle.

### Brief Description of Drawings

[FIG. 1] FIG. 1 is a perspective view illustrating a configuration example of an automatic analyzer 10 according to the embodiment.
[FIG. 2A] FIG. 2A is a top view illustrating an example of a configuration of a cleaning unit 200 of an ultrasonic cleaner according to the present embodiment.
[FIG. 2B] FIG. 2B is a view illustrating an example of an A-A cross-sectional configuration in FIG. 2A.
[FIG. 2C] FIG. 2C is an enlarged view of an inside of a dotted frame in FIG. 2B.
[FIG. 2D] FIG. 2D is a view illustrating a front configuration example of the cleaning unit 200 of FIG. 2A.
[FIG. 2E] FIG. 2E is a view illustrating a side configuration example of the cleaning unit 200 of FIG. 2A.
[FIG. 2F] FIG. 2F is a view illustrating an overall external configuration example of the cleaning unit 200 of FIG. 2A.
[FIG. 2G] FIG. 2G is a view illustrating a cross-sectional configuration example of a cleaning tank of FIG. 2A.
[FIG. 2H] FIG. 2H is a view illustrating an appearance configuration example of the cleaning tank of FIG. 2A.
[FIG. 3] FIG. 3 is an enlarged schematic view of periphery of tips of front masses 206 (206A and 206B in the drawing) of the same ultrasonic transducers 201A and 201B as in FIG. 2C (blackened portions are a liquid in a liquid storage part 216).
[FIG. 4A] FIG. 4A is a schematic view (viewed from above) illustrating a configuration example in which a cleaning tank 210 is supported from the left and right to ensure a space (gap) between a cleaning tank 210 and the front mass 206.
[FIG. 4B] FIG. 4B is a schematic view (viewed from above) illustrating a configuration example in which the cleaning tank 210 is supported by a groove in a cleaning unit base 202 to ensure the space (gap) between the cleaning tank 210 and the front mass 206.
[FIG. 4C] FIG. 4C is a schematic view illustrating a configuration example in which the tip of the front mass 206 is in a through hole 214 and a gap is ensured.
[FIG. 5] FIG. 5 is a diagram illustrating a configuration example of a cleaning rack 30 including the ultrasonic cleaner according to the present embodiment.
[FIG. 6] FIG. 6 is a flowchart of a cleaning operation of a dispensing nozzle by the ultrasonic cleaner according to the present embodiment.
[FIG. 7] FIG. 7 is a diagram illustrating a functional configuration example of the automatic analyzer 10 corresponding to a case of using the ultrasonic cleaner incorporated in the transport rack according to the present embodiment.

### Description of Embodiments

An ultrasonic cleaner according to the present embodiment is characterized in that it has a structure in which a cleaning liquid in a cleaning tank does not enter a portion in which a front mass of an ultrasonic transducer is stored. Hereinafter, an embodiment of the present disclosure will be described in detail with reference to the drawings.

### <Configuration Example of Automatic analyzer>

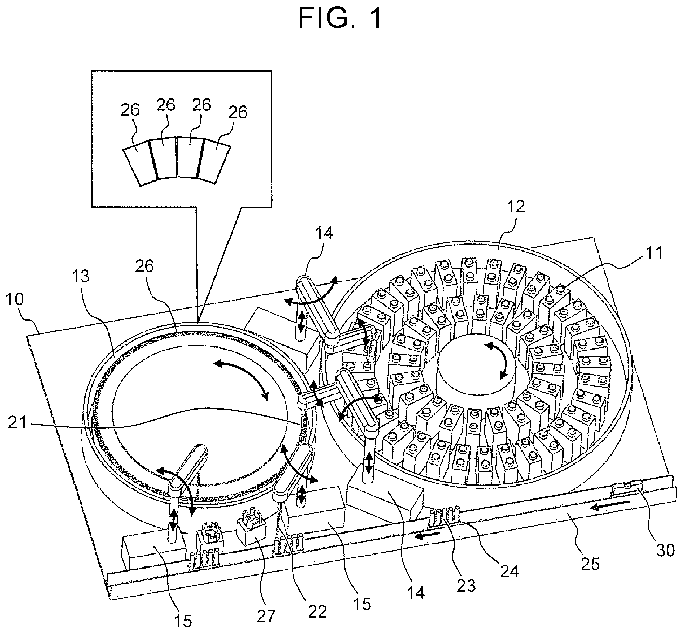

FIG. 1 is a perspective view illustrating a configuration example of an automatic analyzer 10 according to the present embodiment. As illustrated in FIG. 1, the automatic analyzer 10 includes a reagent disk 12 in which a plurality of reagent containers 11 are provided, a reaction disk 13 that mixes a reagent and a sample and measures a reaction, reagent dispensing mechanisms 14 that aspirate and discharge the reagent, and sample dispensing mechanisms 15 that aspirate and discharge the sample.

The reagent dispensing mechanism 14 includes a reagent nozzle 21 that dispenses the reagent. The sample dispensing mechanism 15 includes a sample nozzle 22 that dispenses the sample. Here, the nozzles such as the reagent nozzle 21 and the sample nozzle 22 are collectively referred to as "dispensing nozzles".

The sample put into the device is provided in a rack 24 in a state of being put in a sample container (test tube) 23, and is transported through a transport line 25. A plurality of the sample containers 23 are provided on the sample rack 24. The sample is a sample derived from blood such as serum or whole blood, urine, or the like.

The sample dispensing mechanism 15 moves the sample nozzle 22 to a aspiration position at which sample aspiration from the sample container 23 is performed, a discharge position at which discharging to cells 26 is performed (as illustrated in an enlarged manner in the drawing, each being a small divided container), and a cleaning position at which a cleaning tank 27 for cleaning a tip of the sample nozzle 22 with water is present. The sample dispensing mechanism 15 lowers the sample nozzle 22 according to a height of the sample container 23 at the aspiration position, a height of the cell 26 at the discharge position, and a height of the cleaning tank 27 at the cleaning position. That is, the sample dispensing mechanism 15 has a configuration of moving the sample nozzle 22 to each stop position by rotational movement and vertical movement. Control of the sample dispensing mechanism 15 and control of devices such as the transport line 25 are performed by a control unit (not illustrated).

The automatic analyzer 10 further includes a measurement unit (not illustrated), and analyses a concentration of a predetermined component contained in the sample by measuring a mixed solution of the sample and the reagent stored in the cell 26. The measurement unit (not illustrated) includes, for example, a light source and a photometer. Here, as the photometer, for example, an absorptiometer, a scattering photometer, or the like can be used.

A cleaning rack 30 on which the ultrasonic cleaner is mounted includes a cleaning unit (including a vibrating unit, a cleaning unit base, and a cleaning tank) 200 to be described later, and is used to clean a tip portion of the sample nozzle 22 in contact with the sample. A timing of use is a timing of daily maintenance of the automatic analyzer 10, and in many cases, is before analysis or after the end of analysis. When the number of samples handled per day is large, the cleaning rack 30 may be moved along the transport line 25 between analysis. Accordingly, cleanliness of the sample nozzle 22 can be maintained.

The cleaning rack 30 can be used to clean any sample, not limited to the sample, as long as the sample nozzle 22 or the reagent nozzle 21 can access the transport line 25. A plurality of the sample nozzles 22 can be cleaned during one transport. However, since reuse of the cleaning liquid contaminated by cleaning may cause re-adhesion of dirt, it is desirable to replace the cleaning liquid for each nozzle. In this case, there is a method for flowing one cleaning rack 30 to the transport line 25 a plurality of times (after replacing the cleaning liquid), a method for flowing a plurality of the cleaning racks 30, or the like.

As a transport method for the transport line 25, a method using a belt, a pushing claw, or the like that moves along the transport line 25, a method using an electromagnetic force, or the like can be applied.

### <Configuration Example of Cleaning Unit 200 of Ultrasonic Cleaner>

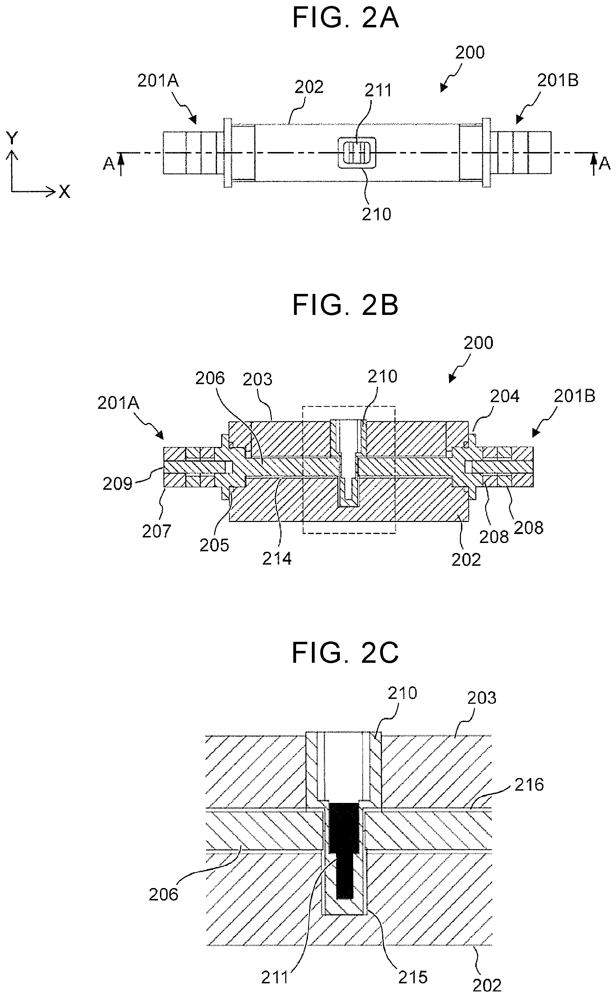

FIG. 2A is a top view illustrating an example of a configuration of a cleaning unit 200 of the ultrasonic cleaner according to the present embodiment. In FIG. 2A, the cleaning unit 200 includes two ultrasonic transducers (vibrating units) 201A and 201B, a cleaning unit base 202, and a cleaning tank 210. A cleaning liquid storage region 211 is provided in the cleaning tank 210.

FIG. 2B is a view illustrating an example of an A-A cross-sectional configuration in FIG. 2A. FIG. 2C is an enlarged view of an inside of a dotted frame in FIG. 2B. As illustrated in FIG. 2B, an upper block 203 having an opening into which the cleaning tank 210 is inserted is provided on the cleaning unit base 202. It is desirable that an upper end of the cleaning tank 210 is as high as or higher than the upper block. The cleaning tank 210 is disposed in a recessed portion at a center of the cleaning unit base 202 and the upper block 203. Through holes 214 into which the ultrasonic transducers 201 are inserted are provided in lateral surface portions of the cleaning unit base 202. A hole (a cleaning tank insertion hole 215) into which the cleaning tank 210 is inserted is provided in an upper surface portion of the cleaning unit base 202. The through holes 214 are formed in an outer wall of the cleaning tank 210 from the left side and the right side in FIG. 2B to the recessed portion (the cleaning tank insertion hole 215).

The ultrasonic transducers 201A and 201B are inserted into the two through holes 214, respectively. The ultrasonic transducers 201A and 201B are fixed to side surfaces of the cleaning unit base 202 by flanges 204 and seals 205 (O-rings). The flange 204 may be a separate component from the ultrasonic transducers 201A and 201B. Actually, the ultrasonic transducers 201A and 201B can be fixed by pressing the flanges 204 (or another fixing component for pressing the ultrasonic transducer 201) in a certain direction of the cleaning tank 210 with screws (however, a tip portion of the front mass 206 is not in contact with the cleaning tank 210). With this configuration, liquid leakage from the through hole 214 can be prevented. In other words, the liquid can be stored without leaking from the O-rings pressed by the ultrasonic transducers 201A and 201B to the cleaning tank insertion hole 215 at the center (hereinafter, a portion that stores the liquid is referred to as a "liquid storage part 216" and distinguished from the cleaning tank 210).

The ultrasonic transducers 201A and 201B have the same configuration as a general bolt-clamped Langevin type transducer (BLT). That is, the ultrasonic transducers 201A and 201B are each implemented by fastening a plurality of piezoelectric elements 208 and a plurality of electrode copper plates (not illustrated) with bolts 209 between the front mass 206 (a metal block on a front surface) and a back mass 207 (a metal block on a back surface). Each of the ultrasonic transducers 201A and 201B includes an elongated cylindrical metal portion (the front mass 206) at a tip thereof. By removing the upper block 203 (including the cleaning tank 210) from the cleaning unit base 202, the cylindrical portion of the front mass 206 of the ultrasonic transducer 201 is exposed. As described above, the ultrasonic transducers 201A and 201B are fixed by bolting similarly to a general BLT. Since the configuration of BLT is advantageous for amplification of amplitude, the BLT is used when strong ultrasonic waves are used, and is also used in an industrial ultrasonic cleaner requiring strong cleaning performance. The ultrasonic transducers 201A and 201B can maximize an amplitude of the tip portion of the front mass 206 by being driven at a resonance frequency.

In the ultrasonic transducers 201A and 201B, a node of vibration (a region in which the amplitude is always small) is provided near the flange 204. The seal 205 is formed of an elastic material. Therefore, an influence of the contact between the front mass 206 and the seal 205 is small.

The through hole 214 for allowing the front mass 206 to pass through is formed in a cylindrical shape by combining the cleaning unit base 202 and the upper block 203 (root portions of the through hole 214 may be inclined or stepped depending on shapes of the ultrasonic transducers 201A and 201B to be used). A substantially uniform gap is formed between a wall surface of the through hole 214 and the ultrasonic transducer 201. The seal 205 is disposed near a root of a cylindrical portion (the front mass 206), and can prevent liquid leakage from the through hole 214. When there is a gap between the front mass 206 and the cleaning tank 210 and the gap is filled with a liquid (a liquid that is less likely to evaporate, for example, silicone oil), the ultrasonic transducer 201 can vibrate without being hindered in function by deformation of the tip portion of the front mass 206 and without coming into contact with the wall surface of the through hole 214 during driving.

When the upper block 203 is removed, or only the cleaning tank 210 is removed, the cylindrical portion of the front mass 206 is exposed as described above, and the liquid in the liquid storage part 216 can be introduced. Accordingly, the gap formed around the cylindrical portion of the front mass 206 inserted into the through hole 214 is filled with the liquid. Since the liquid filled in the liquid storage part 216 does not come into contact with the sample nozzle 22, which is an object to be cleaned, only periodic replenishment of the liquid is necessary, and there is no need to inject or discard the liquid daily. As the liquid to be filled in the liquid storage part 216, it is desirable to use a liquid that is less likely to evaporate, such as silicone oil.

The cleaning liquid is injected into the cleaning liquid storage region 211 (a shaded range in FIG. 2C) in the cleaning tank 210 such that a liquid level is located at or above a height of an upper end of the tip portion of the front mass 206. For example, a step or a mark (the step or the mark may be referred to as a "liquid level mark") is provided inside the cleaning tank 210, and the cleaning liquid can be stored in the cleaning tank 210 by injecting a certain amount of the cleaning liquid using a pipette or by injecting the cleaning liquid using a dedicated dispenser.

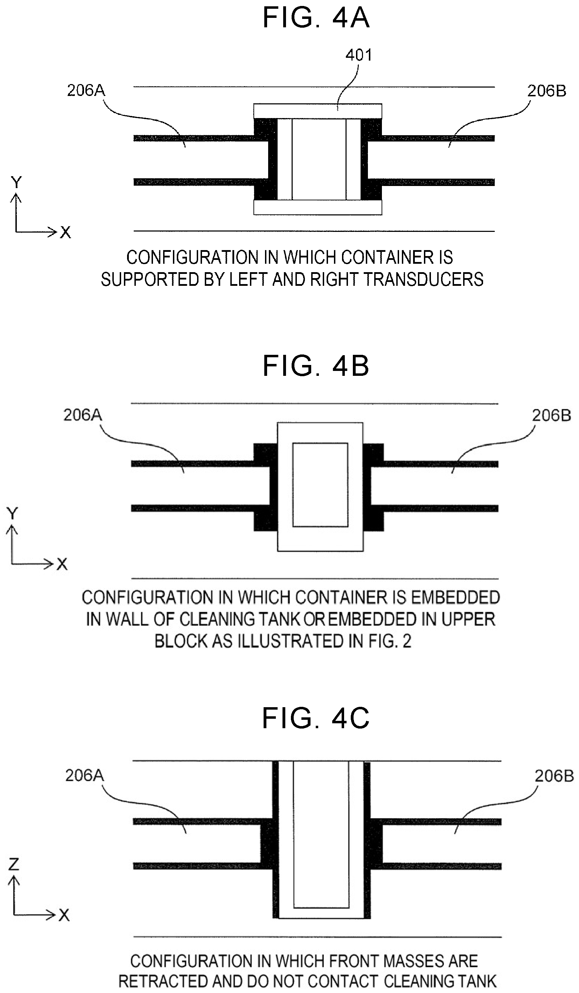

The ultrasonic cleaner according to the present embodiment is used in a state in which a predetermined liquid is injected into each of the liquid storage part 216 and the cleaning tank 210. An arrangement of the cleaning tank 210 will be described in detail with reference to FIGS. 4A to 4C to be described later, and there is a gap between the front mass 206 and the cleaning tank 210, and this gap is also filled with the injected liquid. That is, the cleaning tank 210 and the front mass 206 face each other via the filled liquid. In this state, the two ultrasonic transducers 201 are driven to irradiate the liquid with ultrasonic waves from tip surfaces. Although transmittance varies depending on a material of the cleaning tank 210 (details will be described later), a certain amount of ultrasonic waves passes through a wall surface of the cleaning tank 210 and propagates to the cleaning liquid in the cleaning tank 210.

As described above, the cleaning liquid for cleaning the sample nozzle 22 and the liquid around the front mass 206 can be stored as different types of liquid at different timings.

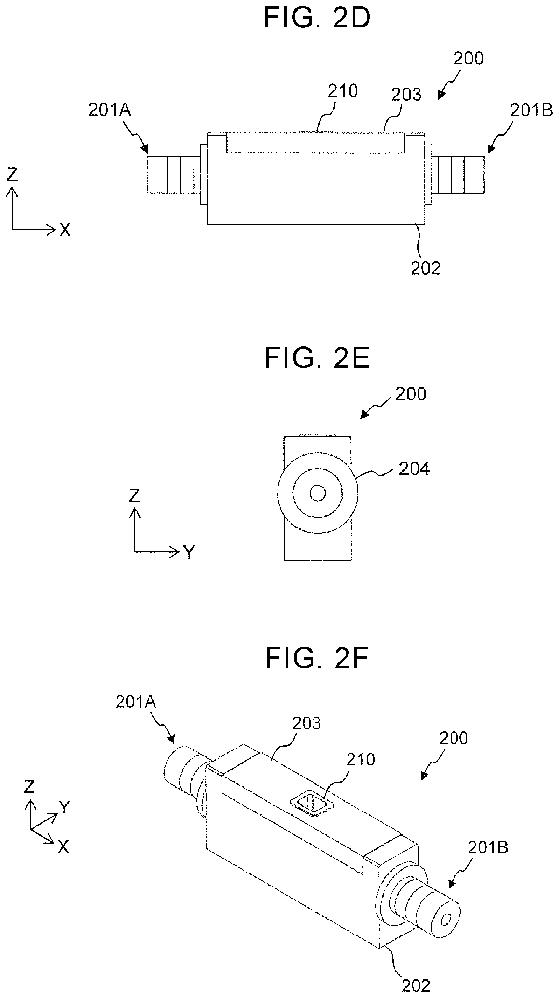

FIG. 2D is a view illustrating a front configuration example of the cleaning unit 200 of FIG. 2A. As illustrated in FIG. 2D, the upper block 203 is connected to an upper portion of the cleaning unit base 202 of the cleaning unit 200. The upper block 203 may be two or more parts, and may be integrated with the cleaning tank 210 by welding or an adhesive, and the integration makes removal and attachment easier.

FIG. 2E is a view illustrating a side configuration example of the cleaning unit 200 of FIG. 2A. As illustrated in FIG. 2E, in the present embodiment, the flange 204 has a circular shape, but may have a shape other than a circular shape by partial cutting to have a size that fits a size of the cleaning tank 210.

FIG. 2F is a view illustrating an overall external configuration example of the cleaning unit 200 of FIG. 2A. As described above, the cleaning tank 210 may have a configuration of being integrally fixed to the upper block 203, or may have a configuration in which the container may be replaceable. The cleaning tank 210 may be replaced each time it is used. It is also possible to provide the cleaning tank 210 in a form in which the cleaning tank 210 can be replaced in a state in which the cleaning liquid is put in advance. In addition to the form of the container, the cleaning tank 210 may be implemented such that the liquid storage part 216 and the cleaning tank 210 are separated by a wall, and the liquid storage part 216 may be a separation wall as the wall surface of the cleaning unit base 202.

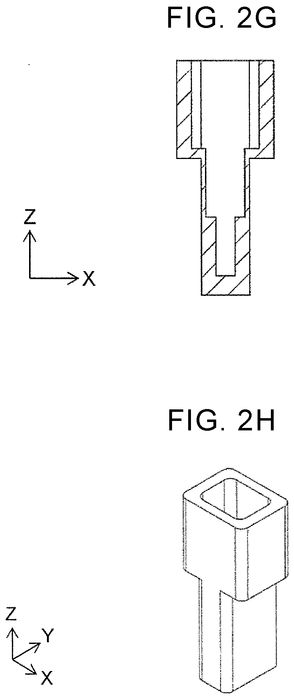

FIGS. 2G and 2H are a cross-sectional view and a perspective view of the cleaning tank 210. As illustrated in FIG. 2G, in the cleaning tank 210, a thickness of a portion closest to the front mass 206 may be reduced. Accordingly, transmission efficiency of the ultrasonic waves can be increased. The cleaning tank 210 can be formed of an elastic material. In FIG. 2G, a distance between the wall surfaces of the cleaning tank 210 in an X direction is, for example, about 3 mm, and a thin portion is, for example, about 0.5 mm. By setting the thickness of the other portions to about 2 mm to 3 mm, rigidity for maintaining the shape as the container can be obtained even when the elastic material is used.

It is desirable that dimensions of the cleaning unit 200 are within the rack 24. With such dimensions, the cleaning unit 200 can be moved to a position of the sample nozzle 22, and the cleaning can be performed.

### <Action of Ultrasonic Waves>

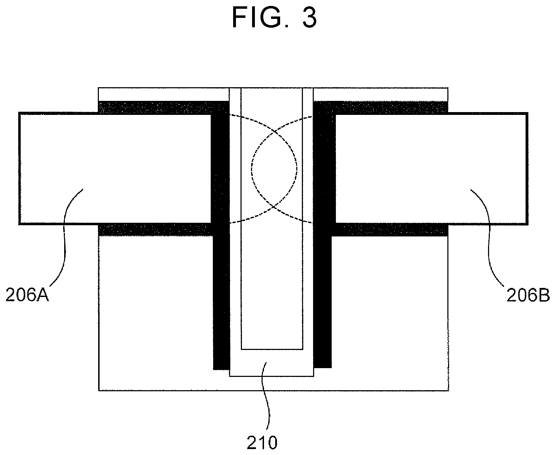

FIG. 3 is an enlarged schematic view of periphery of tips of the front masses 206 (206A and 206B in the drawing) of the same ultrasonic transducers 201A and 201B as in FIG. 2C (blackened portions are the liquid in the liquid storage part 216). In FIG. 3, a region indicated by a dotted line is a region in which a sound pressure is increased by the ultrasonic wave emission (a state in which the ultrasonic waves are transmitted). In particular, when the left and right ultrasonic transducers 201A and 201B are driven in the same phase, the sound pressure increases in the region in which the ultrasonic waves overlap. The sample nozzle 22 can be effectively cleaned by being inserted into the region in which the sound pressure is increased near the center of the cleaning tank 210.

The ultrasonic waves have a characteristic of being easily reflected when a difference in acoustic impedance is large, and easily transmitted when the difference in acoustic impedance is small. In the present embodiment, a high cleaning effect can be obtained by efficiently propagating the ultrasonic waves generated by the ultrasonic transducer 201 to the liquid in the cleaning tank 210 under conditions that the difference in acoustic impedance between the liquid around the front mass 206 and the cleaning tank 210 is small.

The acoustic impedance is determined by a density of a substance and a velocity of sound, and since water (liquid) is about 1.5 × 10⁶ Ns/m³ and an elastic body, such as silicone rubber, is about 1.2 to 1.5 × 10⁶ Ns/m³, a difference in these acoustic impedances is small. In contrast, the acoustic impedance of metal is about 10 times to 40 times that of rubber, and reflectance is higher and the metal is less likely to transmit. That is, since the cleaning liquid of the cleaning layer 210 can be prevented from entering the liquid storage part 216 by forming the wall separating the liquid (for example, silicone oil) around the front mass 206 and the cleaning liquid with an elastic body such as silicone rubber, it is possible to generate ultrasonic waves in the cleaning liquid into which the sample nozzle 22 is inserted without contaminating the liquid around the front mass 206.

It is desirable that a material of the wall separating the liquid around the front mass 206 of the cleaning tank 210 and the cleaning liquid has a characteristic in a range in which a difference from the acoustic impedance of water, which is about 1.5 × 10⁶ Ns/m³, is small, for example, about 1.2 to 1.9 × 10⁶ Ns/m³.

### <Positional Relationship between Cleaning Tank 210 and Front Mass 206>

FIGS. 4A to 4C are views schematically illustrating a positional relationship between the cleaning tank 210 and the front mass 206.

When the cleaning tank 210 and the front mass 206 come into contact with each other, it causes damage to the cleaning tank 210, which has a small thickness, and increases a driving load on the ultrasonic transducer 201. Therefore, in the present embodiment, a configuration is used in which a gap is provided between the cleaning tank 210 and the front mass 206 and the gap is filled with a liquid to propagate ultrasonic waves.

In contrast, in general ultrasonic cleaning, close fixing is performed by an adhesive (or welding) at a wall surface, such as a bottom surface of a cleaning tank to be vibrated (in this case, not an indirect tank but an outer tank). However, when the ultrasonic transducer driven with a large amplitude is fixed to the cleaning tank, there is a high possibility that peeling or cracking of the adhesive (including breakage of the cleaning tank itself) occurs (or the cleaning tank becomes a load and the amplitude of the ultrasonic transducer 201 decreases). When the transducer is fixed instead of the cleaning tank having high rigidity (for example, an SUS material), the vibrations of the two ultrasonic transducers are simultaneously transmitted to the cleaning tank formed of metal, and the ultrasonic waves are transmitted through the cleaning tank as when the ultrasonic waves are reflected toward the respective ultrasonic transducers. Therefore, as in the present embodiment, there is a great advantage in providing a gap between the cleaning tank 210 and the front mass 206 (not in contact with each other).

FIG. 4A is a schematic view (viewed from above) illustrating a configuration example in which the cleaning tank 210 is supported from the left and right to ensure a space (gap) between the cleaning tank 210 and the front mass 206. The cleaning tank 210 includes container support portions 401 on upper and lower portions (side surfaces of the cleaning tank 210 in a Y-axis direction) in the drawing, and a position of the cleaning tank 210 is fixed by being in contact with a wall surface of the cleaning tank insertion hole 215 in the cleaning unit base 202. Accordingly, a gap with the front mass 206 is provided.

FIG. 4B is a schematic view (viewed from above) illustrating a configuration example in which the cleaning tank 210 is supported by a groove in the cleaning unit base 202 to ensure the space (gap) between the cleaning tank 210 and the front mass 206. The position of the cleaning tank 210 is fixed by inserting the cleaning tank 210 into a groove provided in the cleaning tank insertion hole 215 in the cleaning unit base 202. FIG. 4B illustrates a fixing method different from a fixing method for the cleaning tank 210 of FIG. 4A.

FIG. 4C is a schematic view illustrating a configuration example in which the tip of the front mass 206 is in the through hole 214 and a gap is ensured. When the cleaning tank 210 is inserted into the cleaning tank insertion hole 215 in the cleaning unit base 202, the tip of the front mass 206 is in the through hole 214, and a gap is provided by a constant distance from the cleaning tank 210.

In the above configuration, the sound pressure in the cleaning tank 210 increases as the distance between the front mass 206 and the cleaning tank 210 decreases as much as possible (1.0 mm or less). For example, it is desirable that a distance between a tip surface of the front mass 206 and the wall surface of the cleaning tank 210 is close to about 0.1 mm to 0.3 mm.

As described above, to increase the sound pressure due to the ultrasonic wave generated between the two front mass 206A and front mass 206B, it is necessary to make the distance between the front mass 206A and the front mass 206B as close as possible, reduce a width (a length in the X direction) of the cleaning tank 210, and further reduce the thickness (a wall thickness). The sound pressure in the cleaning tank 210 can be increased by reducing the distances between the front masses 206A and 206B and the cleaning tank 210. The above conditions do not depend on the material of the cleaning tank 210, but the sound pressure can be further increased, and the cleaning efficiency can be increased by using the cleaning tank 210 as an elastic material and increasing the transmittance.

### <Configuration Example of Cleaning Rack>

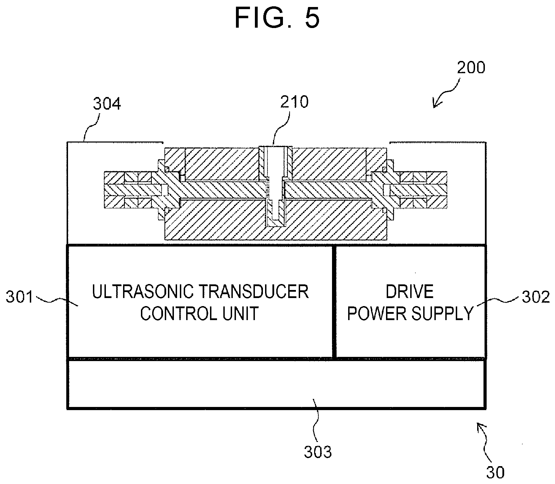

FIG. 5 is a diagram illustrating a configuration example of the cleaning rack 30 including the ultrasonic cleaner according to the present embodiment. As illustrated in FIG. 5, the cleaning rack 30 includes the cleaning unit 200, an ultrasonic transducer control unit 301, a drive power supply 302 (a battery), and a transport base 303.

The ultrasonic transducer control unit 301 controls driving of the ultrasonic transducers 201A and 201B (see FIG. 2A). The ultrasonic transducer control unit 301 generates a sine wave of the resonance frequency of the ultrasonic transducers 201A and 201B to drive the ultrasonic transducers 201A and 201B. The ultrasonic transducer control unit 301 includes an impedance matching circuit for increasing drive currents of the ultrasonic transducers 201A and 201B and amplifying the amplitude, or a circuit for automatically tracking the resonance frequency. The drive power supply 302 is a rechargeable battery, and is charged each time the cleaning rack 30 is used.

The transport base 303 has the same shape as a bottom of the rack 24 used for the sample container 23. Therefore, it is not necessary to change hardware of the transport line 25. The cleaning rack 30 including the cleaning unit 200, the ultrasonic transducer control unit 301, and the drive power supply 302 has a size equal to or less than the rack 24 in a state in which the sample container 23 is provided in the related art.

The cleaning unit 200 may be covered with a cover 304. The cover 304 has a function of preventing the liquid from splashing on electrical components such as the piezoelectric element 208 and electrodes when the liquid is injected into the cleaning tank 210 by a pipette or the like or is discarded. An amount of the cleaning liquid required for cleaning depends on the shape of the cleaning tank 210, but is about several hundred µL (in the present embodiment, for example, 150 µL or less is assumed). Although the cleaning effect can be obtained even when the cleaning liquid is water, a cleaning liquid mixed with a detergent or a detergent itself may be used. Before the cleaning rack 30 is put into the device, a certain amount of cleaning liquid is injected into the cleaning tank 210 and used.

The start and stop of the ultrasonic cleaning operation can be controlled by, for example, providing, above the cleaning unit 200, a sensor that detects the passage of the sample nozzle 22.

As described above, the automatic analyzer 10 according to the present embodiment has a configuration for implementing dispensing nozzle cleaning by transporting the ultrasonic cleaner.

### <Operation Example of Dispensing Nozzle Cleaning>

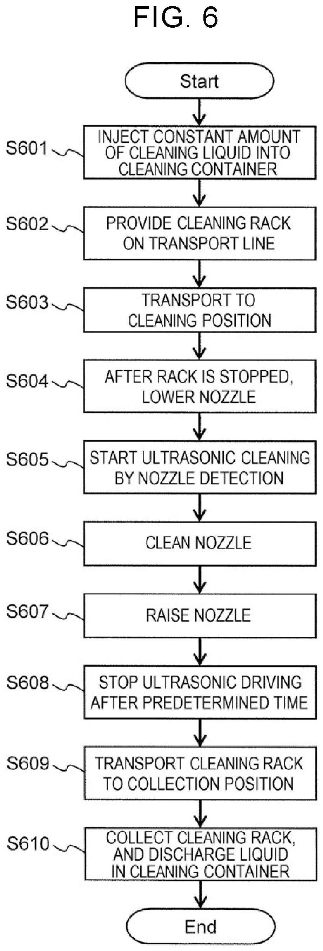

FIG. 6 is a flowchart illustrating a cleaning operation of the dispensing nozzle by the ultrasonic cleaner according to the present embodiment. In the cleaning operation of the dispensing nozzle, the cleaning liquid in the cleaning tank 210 may be replaced daily. The liquid (silicone oil) in the liquid storage part 216 may be injected at the time of shipment and then replenished at the time of maintenance (after several months or longer) of the ultrasonic cleaner.

### (i) Step S601

An operator (user) injects a certain amount of cleaning liquid into the cleaning tank 210 of the cleaning unit 200. Accordingly, the cleaning liquid storage region 211 of the cleaning tank 210 is filled with the cleaning liquid. At this time, a liquid level can be made constant for each cleaning by using a dedicated size container that does not contain more than the amount of liquid filling the capacity of the cleaning liquid storage region 211 or a pipette whose discharge amount is adjusted. Alternatively, a dedicated dispenser may be prepared to inject the cleaning liquid. In a use method for replacing the cleaning tank 210 as described above, the cleaning liquid may be put into the cleaning tank 210 in advance and then set in the cleaning unit 200.

### (ii) Step S602

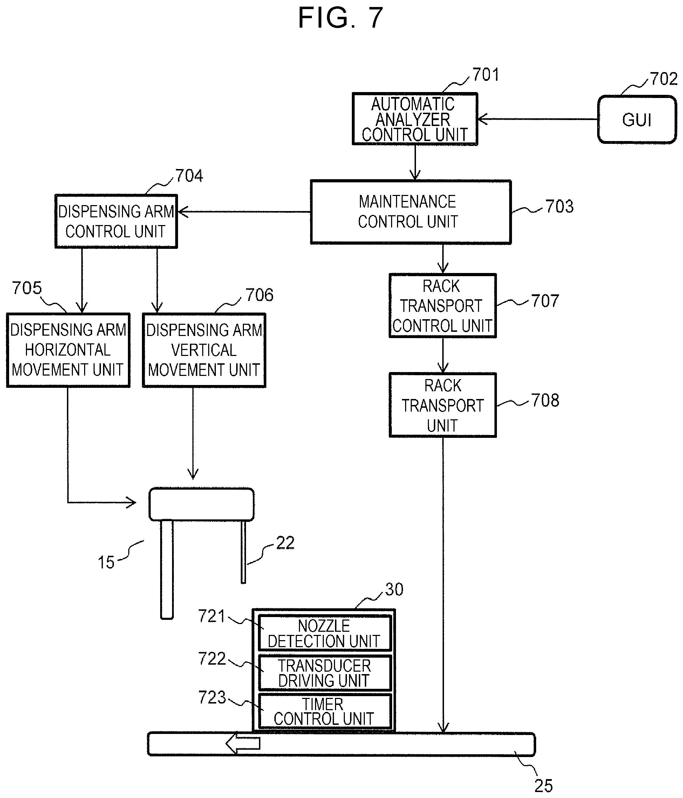

After injecting the cleaning liquid into the cleaning tank 210, the operator provides the cleaning rack 30 on the transport line 25. After providing the cleaning rack 30 in which the cleaning tank 210 filled with the cleaning liquid is set on the transport line 25, the operator may notify the automatic analyzer 10 that the setting of the cleaning rack 30 is completed (click a setting completion button (UI)) using a GUI 702 (see FIG. 7).

### (iii) Step S603

An automatic analyzer control unit 701 (see FIG. 7, for example, implemented by a processor) of the automatic analyzer 10 transports the cleaning rack 30 to the cleaning position (a position in which a target nozzle (the sample nozzle 22) is located) and starts an automatic cleaning operation. A bottom of the cleaning rack 30 has the same shape as a transport portion of the rack 24. Therefore, the cleaning rack 30 can be provided on the transport line 25 in the same manner as the rack 24 that transports the sample container (a blood collection tube) 23. Since the amount of the liquid introduced into the cleaning tank 210 is as small as about several hundred µL, there is a low risk that the cleaning liquid is ejected to an outside due to shaking when the cleaning rack 30 is transported.

### (iv) Step S604

When the transport of the cleaning rack 30 to the cleaning position by the automatic analyzer control unit 701 is completed (the cleaning rack 30 is stopped), the ultrasonic transducer control unit 301 (see FIG. 5, for example, implemented by a processor) lowers the sample nozzle 22 in response to transport completion notification received from the automatic analyzer control unit 701.

### (v) Step S605

When passage of the lowered sample nozzle 22 is detected by a sensor (a nozzle detection unit 721, see FIG. 7) provided in the cleaning rack 30, the ultrasonic transducer control unit 301 controls a transducer driving unit 722 to start ultrasonic driving. The ultrasonic transducer control unit 301 instructs a timer control unit 723 (see FIG. 7) to operate a timer (not illustrated) and start time measurement.

When the normal rack 24 is transported, subsequent analysis and transport processing can be branched by reading a barcode attached to a side surface of the rack 24. Therefore, by attaching a barcode to the cleaning rack 30 at the same position as that of the normal rack 24, it is possible to distinguish between the rack 24 used for inspection and the cleaning rack 30 used for cleaning in the automatic analyzer 10. Therefore, a maintenance operation for cleaning after step S603 can be executed separately from a normal inspection operation.

### (vi) Step S606

After the start of the cleaning operation, the ultrasonic transducer control unit 301 performs cleaning by immersing the tip portion of the sample nozzle 22 in the cleaning liquid.

### (vii) Step S607

When the ultrasonic transducer control unit 301 receives a time measurement result notification from the timer control unit 723 and recognizes that the sample nozzle 22 has been cleaned for a certain period of time, the ultrasonic transducer control unit 301 notifies the automatic analyzer control unit 701 of the completion of the cleaning operation. In response to the notification, the automatic analyzer control unit 701 instructs a dispensing arm control unit 704 to raise the sample nozzle 22.

### (viii) Step S608

The ultrasonic transducer control unit 301 controls the transducer driving unit to stop the ultrasonic driving after a predetermined time has elapsed from the start of the ultrasonic transducer driving (based on time measurement information from the timer). There is also a method for detecting the nozzle elevation by the nozzle detection unit 721 and stopping the driving of the ultrasonic transducer based on the detection, but by using the timer function, it is possible to avoid occurrence of a malfunction in which the nozzle detection unit 721 erroneously detects the nozzle elevation and repeats stopping and starting during cleaning.

### (ix) Step S609

In response to the instruction from the automatic analyzer control unit 701, a rack transport control unit 707 (see FIG. 7) controls a rack transport unit 708 (see FIG. 7) to transport the cleaning rack 30 to a collection position.

### (x) Step S610

The operator performs collection of the cleaning rack 30 and discharging of the cleaning liquid.

Although the cleaning operation of the dispensing nozzle by the ultrasonic cleaner has been described above, the cleaning liquid may be replaced, and cleaning of another sample nozzle 22 may be continuously performed as necessary. When the cleaning is not performed, the cleaning liquid is discharged, and the processing ends.

### <Functional Configuration Example of Automatic analyzer 10>

FIG. 7 is a diagram illustrating a functional configuration example of the automatic analyzer 10 corresponding to a case of using the ultrasonic cleaner incorporated in the transport rack according to the present embodiment.

The automatic analyzer 10 is controlled by the automatic analyzer control unit 701. The user (operator) of the automatic analyzer 10 can instruct analysis processing and cleaning processing from the graphic user interface 702 (GUI). The normal analysis processing and a cleaning maintenance mode according to the present embodiment are performed by a maintenance control unit 703 under the control of the automatic analyzer control unit 701 to perform control of the sample dispensing mechanism 15 and the transport line 25.

The sample dispensing mechanism 15 controls the position of the sample nozzle 22 from the dispensing arm control unit 704 via a dispensing arm horizontal movement unit 705 and a dispensing arm vertical movement unit 706. In the maintenance mode, a horizontal position and a vertical position of the sample nozzle 22 are controlled (are positioned to a depth to which the object to be cleaned is immersed in the cleaning liquid) such that a cleaning range of the tip portion of the sample nozzle 22 is immersed in the liquid in the cleaning liquid storage region 211 in the cleaning tank 210. It is desirable that the horizontal position of the sample nozzle 22 is at a center of the cleaning liquid storage region 211, but the sample nozzle 22 can also be moved horizontally while being immersed. The transport line 25 is driven by the rack transport control unit 707 via the rack transport unit 708.

The cleaning rack 30 includes, independently of the automatic analyzer control unit 701, the nozzle detection unit 721, the transducer driving unit 722 that performs detection of the resonance frequency of the ultrasonic transducer 201 and driving, and the timer control unit 723 that manages an ultrasonic driving time. The nozzle detection unit (sensor) 721 detects the sample nozzle 22, the timer control unit 723 starts counting, and the ultrasonic cleaning is stopped when a certain counter elapses. As described above, the transducer driving unit 722 controls the start and end of driving of the ultrasonic transducer 201.

With the above configuration, the cleaning rack 30 is transported to a position on the transport line 25 accessible by the sample nozzle 22, driving of the ultrasonic transducer 201 mounted on the cleaning rack 30 is started, and the sample nozzle 22 is immersed in the liquid in the cleaning tank 210, thereby enabling cleaning of a cleaning region of the sample nozzle 22.

The reagent nozzle 21 can also be implemented with a similar configuration as long as it can access the transport line 25. In the present embodiment, a case in which the reagent nozzle 21 and the sample nozzle 22 are separately provided has been described, but the reagent and the sample may be dispensed by one common nozzle, depending on the analysis device. Even in such a device, cleaning with a water flow is performed every time a reagent or a sample is dispensed, but daily maintenance is required, and dispensing accuracy can be maintained by performing the ultrasonic cleaning according to the present invention.

<Summary of Embodiment>
(i) The ultrasonic cleaner according to the present embodiment includes the block member (the cleaning unit base 202 + the upper block 203) having the hole portions (the through holes 214) for allowing the front masses 206 to be inserted therein and the cleaning tank installation recessed portion (the cleaning tank insertion hole 215) for installing the cleaning tank (having a wall formed of an elastic body in at least a part thereof) allowing the dispensing nozzle (the sample nozzle 22) to be cleaned to be inserted therein. The through hole 214 is provided in a longitudinal direction (horizontal direction) of the block member, and the cleaning tank insertion hole 215 is provided in a vertical direction. In the ultrasonic cleaner, the liquid storage part 216 in which a liquid (for example, silicone oil) different from the cleaning liquid is implemented by a gap formed between the front mass 206, the through hole 214, and the wall of the cleaning tank 210. The cleaning liquid held in the cleaning tank 210 and the liquid (silicone oil) stored in the liquid storage part 216 are separated by the wall of the cleaning tank 210 (see FIG. 2C). The ultrasonic cleaner has an arrangement configuration as illustrated in FIGS. 2B and 2C, and the tip portion of the front mass 206 emits ultrasonic waves from the side of the cleaning tank 210. As described above, since the front mass 206 is not immersed in the cleaning liquid, the time and effort for cleaning can be reduced, and the amount of cleaning liquid can be reduced. In the above-described embodiment, as illustrated in FIGS. 2A to 2F, the block member is implemented by combining the cleaning unit base 202 and the upper block 203 to facilitate the configuration and disassembly of the ultrasonic cleaner, but the through hole 214 may be formed in an integrated (monolithic) block member. When the block member is implemented by combining two members, two upper and lower block members (the cleaning unit base 202 and the upper block 203) may be combined (vertically overlapped), or two left and right block members (not illustrated) may be combined to form one block member.
(ii) As illustrated in FIG. 2B, the front mass 206 is inserted from both sides of the through hole 214. In this case, the cleaning tank 210 is provided at a position sandwiched between the two front masses 206. Since ultrasonic waves are emitted from both sides of the cleaning tank 210, the dispensing nozzle can be efficiently cleaned.
(iii) The tip portion of the front mass 206 is provided at a position that is not in contact with the wall of the cleaning tank 210 and is separated from the wall of the cleaning tank 210 by 1 mm or less. The space between the tip portion of the front mass 206 and the wall of the cleaning tank 210 is filled with the liquid (silicone oil). That is, the ultrasonic wave emitted from the tip of the front mass 206 propagates to the cleaning liquid in the cleaning tank 210 via the liquid (silicone oil) in the liquid storage part 216. Since the front mass 206 is not in direct contact with the cleaning tank 210, a possibility of damaging the cleaning tank 210 can be reduced. As the wall of the cleaning tank 210 facing (confronting directly) the tip portion of the front mass 206, a wall formed of a material having a characteristic that an acoustic impedance is 1.2 × 10⁶ Ns/m³ to 1.9 × 10⁶ Ns/m³ (for example, silicone rubber) is used. By using a wall formed of a material having a small difference from the acoustic impedance (about 1.5 × 10⁶ Ns/m³) of the cleaning liquid, ultrasonic waves can be efficiently propagated to the cleaning liquid. To propagate the ultrasonic waves to the cleaning liquid more efficiently, the wall of the cleaning tank 210 facing (confronting directly) the tip portion of the front mass 206 is configured to be thinner than the other walls not facing the tip portion of the front mass 206.
(iv) The cleaning tank 210 may have a mark such that a height of a liquid level of the cleaning liquid to be injected is equal to or higher than the vicinity of the upper end of the front mass 206 (see FIG. 2C). Accordingly, the user (operator) can use it as a guide when injecting the cleaning liquid into the cleaning tank 210.
(v) As illustrated in FIGS. 2G and 2H, the cleaning tank 210 includes a lower portion and an upper portion having a distance between outer walls in the longitudinal direction larger than that of the lower portion. The cleaning unit base (first block portion) 202 has a cleaning tank lower portion fixing hole (capable of providing a gap of a certain distance from the tip portion of the front mass 206) for fixing a position of the lower portion of the cleaning tank 210. The upper block (second block) 203 has a through hole for regulating the position of the upper portion of the cleaning tank 210. The through hole and the cleaning tank lower portion fixing hole constitute the cleaning tank installation recessed portion (the cleaning tank insertion hole 215).
(vi) A method for injecting a liquid (for example, silicone oil) into the liquid storage part 216 will be described. First, the user places the front mass 206 on the cleaning unit base (first block) 202 and covers the cleaning unit base 202 with the upper block (second block) 203. Accordingly, the front mass 206 is in a state of being inserted into the through hole 214. Before the cleaning tank 210 is inserted into the cleaning tank insertion hole (cleaning tank installation recessed portion) 215 formed by combining the first block and the second block, the user injects the liquid (silicone oil) from the cleaning tank installation recessed portion into the liquid storage part 216. Then, after injecting the liquid (silicone oil) into the liquid storage part 216, the user inserts the cleaning tank 210 into the cleaning tank installation recessed portion.

Alternatively, the following may be performed. The user combines the cleaning unit base (first block) 202 and the upper block (second block) 203, and inserts the front mass 206 of the ultrasonic cleaner into the through hole 214 formed thereby. Before the cleaning tank 210 is inserted into the cleaning tank insertion hole (cleaning tank installation recessed portion) 215 formed by combining the first block and the second block, the user injects the liquid (silicone oil) from the cleaning tank installation recessed portion into the liquid storage part 216. Then, after injecting the liquid (silicone oil) into the liquid storage part 216, the user inserts the cleaning tank 210 into the cleaning tank installation recessed portion.

(vii) The present embodiment also discloses an automatic analyzer including the ultrasonic cleaner. The automatic analyzer includes the cleaning rack 30 on which the ultrasonic cleaner is mounted, the transport line 25 that transports the cleaning rack 30 to a predetermined cleaning position, and a control unit (the automatic analyzer control unit 701, or the like) that controls a transport operation by the transport line 25 and a cleaning operation of the sample nozzle (dispensing nozzle) 22. The automatic analyzer control unit 701, or the like executes processing of lowering the sample nozzle 22 and inserting the sample nozzle 22 into the cleaning tank 210 on the cleaning rack 30 at the cleaning position, processing of starting ultrasonic cleaning for the sample nozzle 22 inserted into the cleaning tank 210 using the ultrasonic cleaner, and processing of stopping the ultrasonic cleaning.

The cleaning rack 30 includes a sensor (the nozzle detection unit 721) that detects insertion of the sample nozzle 22. The automatic analyzer control unit 701 receives, from the sensor, a signal indicating that the sample nozzle 22 is inserted into the cleaning tank 210, and starts the ultrasonic cleaning in response to the signal. The cleaning rack 30 also includes a timer that measures a time since insertion of the sample nozzle 22 is detected. Then, the automatic analyzer control unit 701 stops the ultrasonic cleaning when the timer measures a predetermined time (a measurement value is acquired from the timer control unit 723).

### Reference Signs List

10: automatic analyzer
11: reagent container
12: reagent disk
13: reaction disk
14: reagent dispensing mechanism
15: sample dispensing mechanism
21: reagent nozzle
22: sample nozzle
23: sample container
24: rack
25: transport line
26: cell
27, 210: cleaning tank
30: cleaning rack
201: ultrasonic transducer
202: cleaning unit base
203: upper block
204: flange
205: seal
206: front mass
207: back mass
208: piezoelectric element
209: bolt
211: cleaning liquid storage region
214: through hole
215: cleaning tank insertion hole
401: container support portion
701: automatic analyzer control unit
702: graphic user interface
703: maintenance control unit
704: dispensing arm control unit
705: dispensing arm horizontal movement unit
706: dispensing arm vertical movement unit
707: rack transport control unit
708: rack transport unit
721: nozzle detection unit
722: transducer driving unit
723: timer control unit

## Claims

1. An ultrasonic cleaner for ultrasonically cleaning a dispensing nozzle, the ultrasonic cleaner comprising:
an ultrasonic transducer including a front mass; and
a block member having a hole portion provided in a longitudinal direction for allowing the front mass to be inserted therein, and a cleaning tank installation recessed portion for installing a cleaning tank, which is a cleaning tank allowing a dispensing nozzle to be cleaned to be inserted therein and which has a wall at least partially formed of an elastic body, wherein
the cleaning tank installation recessed portion is provided in the block member in a direction different from the longitudinal direction in which the hole portion is provided,
a liquid storage part configured to store a liquid different from a cleaning liquid is formed by a gap formed between the front mass inserted into the hole portion, the hole portion, and the wall of the cleaning tank,
the cleaning liquid held in the cleaning tank and the liquid stored in the liquid storage part are separated by the wall of the cleaning tank, and
a tip portion of the front mass is disposed to emit an ultrasonic wave from a side of the cleaning tank.

2. The ultrasonic cleaner according to claim 1, wherein
the front masses of two of the ultrasonic transducers are respectively inserted into the hole portions in the block member from corresponding positions in the longitudinal direction, and
the cleaning tank is installed at a position sandwiched between the front masses of the two ultrasonic transducers.

3. The ultrasonic cleaner according to claim 1, wherein
the tip portion of the front mass of the ultrasonic transducer is not in contact with the wall of the cleaning tank and is provided at a position separated by 1 mm or less, and a space between the tip portion of the front mass and the wall of the cleaning tank is filled with the liquid.

4. The ultrasonic cleaner according to claim 1, wherein
a material of the wall of the cleaning tank facing the tip portion of the front mass has an acoustic impedance of 1.2 × 10⁶ Ns/m³ to 1.9 × 10⁶ Ns/m³.

5. The ultrasonic cleaner according to claim 1, wherein
a wall of the cleaning tank facing the tip portion of the front mass is thinner than another wall not facing the tip portion of the front mass.

6. The ultrasonic cleaner according to claim 1, wherein
the block member includes a first block portion in which the ultrasonic transducer is fixed and a second block portion that covers the front mass, and is implemented by combining the first block portion and the second block portion, and
the cleaning tank installation recessed portion is formed when the first block portion and the second block portion are combined.

7. The ultrasonic cleaner according to claim 6, wherein
the cleaning tank has a mark such that a height of a liquid level of the cleaning liquid to be injected is equal to or higher than vicinity of an upper end of the front mass.

8. The ultrasonic cleaner according to claim 6, wherein
the cleaning tank has a lower portion and an upper portion in which a distance between outer walls in the longitudinal direction is larger than a distance between outer walls in the longitudinal direction of the lower portion,
the first block portion has a cleaning tank lower portion fixing hole for fixing a position of the lower portion of the cleaning tank and enabling a gap of a constant distance to be provided with the tip portion of the front mass, and
the second block portion has a through hole for regulating a position of the upper portion of the cleaning tank.

9. A method for injecting the liquid into the liquid storage part of the ultrasonic cleaner according to claim 6, the method comprising:
placing the front mass on the first block portion and covering the front mass with the second block portion;
inserting the front mass of the ultrasonic cleaner into the hole portion formed by combining the first block portion and the second block portion;
before inserting the cleaning tank into the cleaning tank installation recessed portion, which is formed by combining the first block portion and the second block portion, injecting the liquid from the cleaning tank installation recessed portion into the liquid storage part; and
after injecting the liquid into the liquid storage part, inserting the cleaning tank into the cleaning tank installation recessed portion.

10. An automatic analyzer comprising:
a cleaning rack on which the ultrasonic cleaner according to claim 1 configured to hold the cleaning liquid in the cleaning tank is mounted;
a transport line configured to transport the cleaning rack to a predetermined cleaning position; and
a control unit configured to control a transport operation by the transport line and a cleaning operation of the dispensing nozzle, wherein
the control unit executes
processing of lowering the dispensing nozzle and inserting the dispensing nozzle into the cleaning tank on the cleaning rack at the predetermined cleaning position,
processing of starting ultrasonic cleaning for the dispensing nozzle inserted into the cleaning tank using the ultrasonic cleaner, and
processing of stopping the ultrasonic cleaning.

11. The automatic analyzer according to claim 10, wherein
the cleaning rack includes a sensor configured to detect insertion of the dispensing nozzle, and
the control unit receives, from the sensor, a signal indicating that the dispensing nozzle is inserted into the cleaning tank, and starts the ultrasonic cleaning in response to the signal.

12. The automatic analyzer according to claim 11, wherein
the cleaning rack further includes a timer configured to measure a time since insertion of the dispensing nozzle is detected, and
the control unit stops the ultrasonic cleaning when a predetermined time is measured by the timer.
